# EUROPEAN PATENT APPLICATION

(11) **EP 3 943 214 A1**
(43) Date of publication of application: **26.01.2022**
(21) Application number: 20773716.4
(22) Date of filing: 17.03.2020
(51) Int. Cl.: B22F 1/00, B22F 5/00, H01M 6/04, H01M 6/14, C22C 1/05, H01M 4/38, H01M 4/48, H01M 4/587, H01G 11/32, H01G 11/36, H01G 11/46

(54) **COMPOSITE MATERIAL, ELECTRODE MATERIAL FOR ELECTRICITY STORAGE DEVICES, AND ELECTRICITY STORAGE DEVICE**

(30) Priority: 20.03.2019 JP 2019053134
(71) Applicant: SEKISUI CHEMICAL CO., LTD., Osaka-shi Osaka 530-8565 (JP)
(72) Inventor: URAYAMA, Takahiro, Mishima-gun, Osaka 618-0021 (JP); WADA, Takuya, Mishima-gun, Osaka 618-0021 (JP); SASAGAWA, Naoki, Mishima-gun, Osaka 618-0021 (JP)
(74) Representative: Ter Meer Steinmeister & Partner
(86) International application number: PCT/JP2020/011629
(87) International publication number: WO 2020/189662

(57) **Abstract**

Provided is a composite material in which a carbon material and nanoparticles are efficiently combined to enhance the battery characteristic of a secondary battery. The composite material including a carbon material having a plurality of recesses and a plurality of protrusions and including nanoparticles that are at least partially combined with the carbon material, the composite material having a rate of the nanoparticles combined in the carbon material and the nanoparticles of 11% by weight or more.

## Description

### TECHNICAL FIELD

The present invention relates to a composite material including a carbon material, and relates to an electrode material for an electricity storage device and an electricity storage device, in which the composite material is used.

### BACKGROUND ART

Electricity storage devices such as capacitors and lithium ion secondary batteries have been actively researched and developed in recent years for mobile devices, hybrid vehicles, electric vehicles, home electricity storage applications, and the like. As an electrode material for the electricity storage devices, carbon materials such as graphite, activated carbon, carbon nanofibers, and carbon nanotubes are widely used from the viewpoint of the environment.

Patent Document 1 below discloses a secondary battery in which a negative electrode including a negative electrode current collector and a negative electrode active material is used. Patent Document 1 describes that the negative electrode active material includes a graphite intercalation compound in which a metal layer including fine particles of a metal capable of forming an alloy with lithium is intercalated as a guest between layers of graphite as a host. Patent Document 1 describes that the fine particles of a metal capable of forming an alloy with lithium have an average particle size in the range of 10 nm to 100 nm. Furthermore, Patent Document 1 describes that examples of the fine particles of a metal capable of forming an alloy with lithium include fine particles of Sn, Si, Pb, Al, and Ga.

### Related Art Document

### Patent Document

Patent Document 1: JP 5245021 B2

### SUMMARY OF THE INVENTION

### PROBLEMS TO BE SOLVED BY THE INVENTION

The present inventors have found that the carbon material and the nanoparticles as in Patent Document 1 are simply mixed and difficult to combine, and therefore the carbon material and the nanoparticles sometimes cannot sufficiently enhance the characteristic such as the battery characteristic when used as an electrode material for an electricity storage device. In particular, when the carbon material and the nanoparticles are used as a negative electrode material for a secondary battery as in Patent Document 1, a conductive path is difficult to form with the carbon material, and therefore the initial capacity cannot be sufficiently enhanced. Furthermore, in use of the secondary battery, the nanoparticles sometimes separate from the carbon material, and as a result, the charge/discharge cycle characteristic is sometimes deteriorated.

An object of the present invention is to provide a composite material in which a carbon material and nanoparticles are efficiently combined to enhance the battery characteristic of a secondary battery, and to provide an electrode material for an electricity storage device and an electricity storage device, in which the composite material is used.

### MEANS FOR SOLVING THE PROBLEMS

The composite material according to the present invention includes a carbon material having a plurality of recesses and a plurality of protrusions and includes nanoparticles that are at least partially combined with the carbon material, and the composite material has a rate of the nanoparticles combined in the carbon material and the nanoparticles of 11% by weight or more.

In a specific aspect of the composite material according to the present invention, the rate of the nanoparticles combined in the carbon material and the nanoparticles is 15% by weight or more.

In another specific aspect of the composite material according to the present invention, the nanoparticles are placed in the plurality of recesses of the carbon material.

In still another specific aspect of the composite material according to the present invention, the carbon material includes a carbon material having a graphene laminated structure.

In still another specific aspect of the composite material according to the present invention, the carbon material having a graphene laminated structure is graphite or exfoliated graphite.

In still another specific aspect of the composite material according to the present invention, the carbon material having a graphene laminated structure is partially exfoliated graphite having a graphite structure in which graphite is partially exfoliated.

In still another specific aspect of the composite material according to the present invention, the nanoparticles are particles of a metal, a metal compound, a metal oxide, or an oxide of a metal compound.

In still another specific aspect of the composite material according to the present invention, the metal, the metal compound, the metal oxide, or the oxide of a metal compound includes at least one metal selected from the group consisting of Si, Au, Ag, Zn, Co, Cu, Sn, Ni, Pd, Fe, Mo, Ti, Li, Nb, Mg, and Mn.

The electrode material for an electricity storage device according to the present invention includes the composite material configured according to the present invention.

The electricity storage device according to the present invention includes an electrode including the electrode material for an electricity storage device, the electrode material configured according to the present invention.

### EFFECT OF THE INVENTION

According to the present invention, it is possible to provide a composite material in which a carbon material and nanoparticles are efficiently combined to enhance the battery characteristic of a secondary battery, and to provide an electrode material for an electricity storage device and an electricity storage device, in which the composite material is used.

### BRIEF DESCRIPTION OF DRAWINGS

[Fig. 1] Fig. 1 is a scanning electron microscope (SEM) photograph of a carbon material obtained in Example 1 at a magnification of 5,000 times.
[Fig. 2] Fig. 2 is a scanning electron microscope (SEM) photograph of the carbon material obtained in Example 1 at a magnification of 10,000 times.

### MODES FOR CARRYING OUT THE INVENTION

Hereinafter, details of the present invention will be described.

### [Composite material]

The composite material according to the present invention includes a carbon material and nanoparticles. The carbon material has a plurality of recesses and a plurality of protrusions. The carbon material and the nanoparticles are at least partially combined. The rate of the nanoparticles combined in the carbon material and the nanoparticles is 11% by weight or more.

In the present invention, whether the carbon material and the nanomaterial are combined can be judged by whether the nanoparticles are eluted in a filtrate when the composite material is dispersed in a mixed solvent of water and ethanol (at a mass ratio of 1 : 1) and then the resulting mixture is suction-filtered.

The conditions of the dispersion in use of, for example, an ultrasonic treatment device (manufactured by HONDA ELECTRONICS CO., LTD.) are 100 W, a transmission frequency of 45 kHz, and 1.5 hours. As a filter paper in the suction filtration, for example, a PTFE membrane filter (3 µm, 47Φ) with a product number "T300A047A" manufactured by ADVANTEC Group can be used.

The rate of the nanoparticles combined in the carbon material and the nanoparticles is defined as the weight proportion of the nanoparticles in the composite material, and can be determined using elemental analysis of the solid obtained through the suction filtration with X-ray photoelectron spectroscopy (XPS). In the X-ray photoelectron spectroscopy (XPS), measurement can be performed using, for example, an X-ray photoelectron spectrometer (manufactured by ULVAC-PHI, Inc., product number "PHI5000 Versa Probe II"). The measurement conditions in the XPS is as follows.

### <XPS measurement conditions>

X-ray source: Monochromatized Al Kα
Photoelectron take-off angle: 45°
Spectrometer: Electrostatic concentric hemispherical analyzer
X-ray beam diameter: 200 µm
Pass energy: 58.7eV
Elements to be measured: Carbon atom, oxygen atom, metal atom derived from nanoparticles

For example, when the nanoparticles are Si particles, the number of sweeps for each element can be set as follows. The number can be set to 1 for a carbon atom, 3 for an oxygen atom, and 8 for a metal atom derived from the nanoparticles. The number of sweeps for each element can be appropriately changed according to the kind of nanoparticles.

In general, when elemental analysis of nanoparticles is performed using XPS, elements other than the elements of the nanoparticles themselves are detected such as carbon and oxygen. Meanwhile, when elemental analysis of the carbon material itself is performed, carbon and oxygen are detected. Therefore, in the elemental analysis of the composite material, elemental analysis of the nanoparticles themselves is performed first, and the weight proportions of carbon and oxygen contained in the nanoparticles are calculated in advance. Subsequently, elemental analysis of the composite material is performed, and from the weight proportions in the composite material, the weight proportions of carbon and oxygen contained in the nanoparticles are subtracted based on the weight proportions in the nanoparticles calculated in advance. Then, the weight proportions of the remaining carbon and oxygen can be obtained as the weight proportions in the carbon material in the composite material. From the weight proportions in the carbon material in the composite material, the weight proportion of the nanoparticles can be determined, and the resulting weight proportion of the nanoparticles can be regarded as the rate of the nanoparticles combined.

Hereinafter, a method of determining the rate of the nanoparticles combined will be described as an example in the case that the nanoparticles are Si particles.

In one example, the element proportions (weight proportions) in the Si particles determined using XPS are assumed to be (C: 5%, O: 45%, Si: 50%). At the same time, the element proportions (weight proportions) in the composite material determined using XPS are assumed to be (C: 80%, O: 15%, Si: 5%). Since the weight proportion of Si contained in the composite material is 5%, the weight proportions in the Si particles contained in the composite material are calculated to be (C: 0.5%, O: 4.5%, Si: 5%) from the element proportions in the Si particles themselves. Then, from the weight proportions in the entire composite material (C: 80%, O: 15%, Si: 5%), the weight proportions in Si particles contained in the composite material (C: 0.5%, O: 4.5%, Si: 5%) are subtracted respectively to obtain the weight proportions in the carbon material contained in the composite material (C: 79.5%, O: 10.5%, Si: 0%). Therefore, the weight proportions in the composite material are calculated to be 90% (79.5% + 10.5%) for the carbon material and 10% (0.5% + 4.5% + 5%) for the Si particles. The weight proportion of the Si particles is the rate of the nanoparticles combined, so that the rate can be 10% by weight.

In the present invention, the rate of the nanoparticles combined in the carbon material and the nanoparticles (% by weight) may be determined, through differential thermal analysis of the solid obtained through the suction filtration, from the thermogravimetric changes of the carbon material and the nanoparticles.

The composite material according to the present invention includes the carbon material having a plurality of recesses and a plurality of protrusions and includes the nanoparticles that are at least partially combined with the carbon material, and the composite material has a rate of the nanoparticles combined in the carbon material and the nanoparticles of the above-described lower limit or more. In such a composite material, the carbon material and the nanoparticles can be efficiently combined to enhance the battery characteristic of a secondary battery.

Conventionally, a carbon material and nanoparticles are simply mixed and difficult to combine, and therefore the carbon material and the nanoparticles sometimes cannot sufficiently enhance the characteristic such as the battery characteristic when used as an electrode material for an electricity storage device. In particular, when the carbon material and the nanoparticles are used as an electrode material for a secondary battery, a conductive path is difficult to form with the carbon material, and therefore the initial capacity cannot be sufficiently enhanced. Furthermore, in use of the secondary battery, the nanoparticles sometimes separate from the carbon material, and as a result, the charge/discharge cycle characteristic is sometimes deteriorated.

The present inventors have focused on the rate of the nanoparticles combined in the carbon material, having a plurality of recesses and a plurality of protrusions, and the nanoparticles, and have found that by setting the rate to the above-described lower limit or more, it is possible to efficiently combine the carbon material and the nanoparticles to enhance the battery characteristic of a secondary battery.

Therefore, according to the present invention, the rate of the nanoparticles combined can be the above-described lower limit or more by using a carbon material having a plurality of recesses and a plurality of protrusions, and as a result, a conductive path can be further easily formed with the carbon material to enhance the initial capacity sufficiently. Furthermore, in use of the secondary battery, it can be possible that the nanoparticles rarely separate from the carbon material, and as a result, the charge/discharge cycle characteristic can be improved.

In the present invention, the rate of the nanoparticles combined in the carbon material and the nanoparticles is preferably 15% by weight or more, and more preferably 20% by weight or more. By setting the rate of the nanoparticles combined in the carbon material and the nanoparticles to the above-described lower limit or more, it is possible to further efficiently combine the carbon material and the nanoparticles to further enhance the battery characteristic of a secondary battery. The upper limit of the rate of the nanoparticles combined in the carbon material and the nanoparticles is not particularly limited, and can be, for example, 70% by weight.

### (Carbon material)

The carbon material used in the present invention has a plurality of recesses and a plurality of protrusions.

When the plurality of recesses each have a substantially circular planar shape, each recess preferably has a diameter of 0.1 µm or more and 1,000 µm or less. When the plurality of recesses each have a substantially elliptical planar shape, each recess preferably has a long diameter of 0.1 µm or more and 1,000 µm or less. When the plurality of recesses each have a substantially rectangular planar shape, each recess preferably has a long side of 0.1 µm or more and 1,000 µm or less. The plurality of recesses preferably have a depth of 0.1 µm or more and 1,000 µm or less.

When the plurality of protrusions each have a substantially circular planar shape, each protrusion preferably has a diameter of 0.1 µm or more and 1,000 µm or less. When the plurality of protrusions each have a substantially elliptical planar shape, each protrusion preferably has a long diameter of 0.1 µm or more and 1,000 µm or less. When the plurality of protrusions each have a substantially rectangular planar shape, each protrusion preferably has a long side of 0.1 µm or more and 1,000 µm or less. The plurality of protrusions preferably have a height of 0.1 µm or more and 1,000 µm or less. When the plurality of recesses and the plurality of protrusions each have a shape and a size in the above-described ranges, the nanoparticles can be efficiently placed in the plurality of recesses, and as a result, the battery characteristic of a secondary battery can be further enhanced.

The carbon material according to the present invention is preferably a porous material. In this case, the plurality of recesses correspond to the pores of the porous material.

The carbon material preferably has a BET specific surface area of 240 m²/g or more, more preferably 450 m²/g or more, and still more preferably 1,100 m²/g or more, and preferably 4,000 m²/g or less and more preferably 3,500 m²/g or less. When the BET specific surface area is within the above-described range, the battery characteristic such as the capacity of a secondary battery can be further enhanced.

The carbon material may be provided with pores such as mesopores. The term "mesopore" refers to a pore having a pore size of 2 nm or more and 50 nm or less. The term "volume of the mesopores" refers to the sum of the volumes of all the mesopores in the carbon material (total mesopore volume). The volume of the mesopores can be measured by, for example, the Barret-Joyner-Hallender (BJH) method, which is a gas adsorption method.

The volume of the mesopores is preferably 0.04 cm³/g or more, more preferably 0.05 cm³/g or more, and still more preferably 0.1 cm³/g or more. The upper limit of the volume of the mesopores is not particularly limited, and is preferably 20 cm³/g or less, and more preferably 1 cm³/g or less. When the volume of the mesopores is the above-described lower limit or more, an electrolytic solution further easily permeates the surface of the carbon material to utilize the large specific surface area further effectively, so that the capacity of a secondary battery can be further increased.

The carbon material may be provided with pores other than the mesopores, such as micropores. The volume of the micropores is preferably 1.0 cm³/g or less, and more preferably 0.8 cm³/g or less. The lower limit of the volume of the micropores is not particularly limited, and is preferably 0.01 cm³/g or more. The micropores contribute to the improvement of the specific surface area. However, the pore size is so small that an electrolytic solution rarely permeates the surface, and the surface area is difficult to utilize as a battery. When the volume of the micropores is the above-described upper limit or less, an electrolytic solution further easily permeates the surface of the carbon material to utilize the large specific surface area further effectively, so that the capacity of a secondary battery can be further increased.

The term "micropore" refers to a pore having a pore size of less than 2 nm. The volume of the micropores can be measured by, for example, a micropore analysis (MP) method, which is a gas adsorption method. The term "volume of the micropores" refers to the sum of the volumes of all the micropores in the carbon material.

The carbon material may include a carbide of a resin. The carbide of a resin is preferably amorphous carbon. When the amorphous carbon is measured using an X-ray diffraction method, it is preferable that no peak be detected in the vicinity of 2θ of 26°. A part of the resin may remain without being carbonized. Note that the resin is used for the purpose of forming the carbide and is to be distinguished from a binder used as an electrode material of a secondary battery.

Examples of the resin used in the carbide of a resin include polypropylene glycol, polyethylene glycol, a styrene polymer (polystyrene), a vinyl acetate polymer (polyvinyl acetate), polyglycidyl methacrylate, polyvinyl butyral, polyacrylic acid, polyesters, styrene butadiene rubber, polyimide resins, polytetrafluoroethylene, and fluorine-based polymers such as polyvinylidene fluoride. The resins may be used singly or in combination of two or more kinds thereof. Polyethylene glycol and aromatic polyesters are preferably used.

In the present invention, the content of the resin and/or the carbide of a resin included in 100% by weight of the carbon material is preferably 1% by weight or more, more preferably 3% by weight or more, still more preferably 10% by weight or more, and particularly preferably 15% by weight or more, and preferably 99% by weight or less and more preferably 95% by weight or less. By setting the content of the resin and/or the carbide of a resin to the above-described lower limit or more and the above-described upper limit or less, it is possible to further enhance the battery characteristic of a secondary battery.

The "content of the resin and/or the carbide of a resin included in 100% by weight of the carbon material" can be determined, through differential thermal analysis of the composite material, from the thermogravimetric decrease.

The carbon material preferably includes a carbon material having a graphene laminated structure. In this case, the carbon material can further enhance the conductivity. Therefore, when used as an electrode material for a secondary battery, the carbon material can further improve the battery characteristic such as the rate characteristic.

The carbon material may include only the carbon material having a graphene laminated structure, or may include only the carbide of a resin. The carbon material may be a mixture of the carbon material having a graphene laminated structure and the carbide of a resin. The carbon material may further include a resin remaining without being carbonized.

Whether a carbon material has a graphene laminated structure can be confirmed by, in measurement of the X-ray diffraction spectrum of the carbon material using a CuKα ray (wavelength: 1.541 Å), whether a peak in the vicinity of 2θ = 26° (a peak derived from a graphene laminated structure) is observed. The X-ray diffraction spectrum can be measured using a wide-angle X-ray diffraction method. As the X-ray diffractometer, for example, SmartLab (manufactured by Rigaku Corporation) can be used.

The carbon material may be a composite of the carbide of a resin and the carbon material having a graphene laminated structure. In this case, when the composite is measured using an X-ray diffraction method, the strength of the peak in the vicinity of 2θ of 26° depends on the compounding proportions of amorphous carbon as the carbide of a resin and crystalline graphite. Also in this case, a part of the resin may remain without being carbonized.

In the present invention, examples of the carbon material having a graphene laminated structure include graphite and exfoliated graphite.

Graphite is a laminate of a plurality of graphene sheets. The number of stacked graphene sheets in graphite is usually about 100,000 to 1,000,000. As the graphite, for example, natural graphite, artificial graphite, or expanded graphite can be used. Expanded graphite has a larger distance between graphene layers than ordinary graphite at a high proportion. Therefore, expanded graphite is preferably used as the graphite.

The exfoliated graphite is produced through exfoliating the original graphite, and is a laminate of graphene sheets that is thinner than the original graphite. The number of stacked graphene sheets in the exfoliated graphite is to be smaller than that of the original graphite. The exfoliated graphite may be oxidized exfoliated graphite.

In the exfoliated graphite, the number of stacked graphene sheets is not particularly limited, and is preferably 2 or more and more preferably 5 or more, and preferably 1,000 or less and more preferably 500 or less. When the number of stacked graphene sheets is the above-described lower limit or more, the exfoliated graphite is prevented from scrolling in a liquid and being stacked, and as a result, the conductivity of the exfoliated graphite can be further enhanced. When the number of stacked graphene sheets is the above-described upper limit or less, the specific surface area of the exfoliated graphite can be further increased.

The exfoliated graphite is preferably partially exfoliated graphite having a structure in which graphite is partially exfoliated.

More specifically, the phrase "graphite is partially exfoliated" means that a graphene laminate has graphene layers separated in the range from the edge to the inside to some extent, that is, a part of the graphite is exfoliated at the edge (edge portion). In addition, the phrase means that the graphite layers are stacked in the central portion in the same manner as in the original graphite or the primary exfoliated graphite. Therefore, the portion where a part of the graphite is exfoliated at the edge leads to the central portion. Furthermore, the partially exfoliated graphite may include exfoliated graphite whose edge is exfoliated.

As described above, the partially exfoliated graphite has a central portion in which the graphite layers are stacked in the same manner as in the original graphite or the primary exfoliated graphite. Therefore, in the partially exfoliated graphite, the degree of graphitization is higher than that in conventional graphene oxides and carbon blacks, and the conductivity is excellent. Therefore, when used as an electrode material for a secondary battery, the partially exfoliated graphite can further improve the battery characteristic such as the rate characteristic.

Whether graphite is partially exfoliated can be confirmed, for example, from observation with a scanning electron microscope (SEM) or from the X-ray diffraction spectrum as in the case of the exfoliated graphite/resin composite material described in WO 2014/034156 A.

### (Nanoparticles)

The nanoparticles used in the present invention preferably have an average primary particle size of 1 nm or more and more preferably 50 nm or more, and preferably 500 nm or less and more preferably 100 nm or less. For determination of the primary average particle size of the nanoparticles, each of the nanoparticles are singly observed with a transmission electron microscope (TEM image), and the average primary particle size of any 30 particles can be determined. As the transmission electron microscope, for example, JEM-2100 (manufactured by JEOL Ltd.) can be used. As the nanoparticles used in the present invention, particles of a metal, a metal compound, a metal oxide, an oxide of a metal compound, or a carbon material can be used.

The metal included in the metal, the metal compound, the metal oxide, or the oxide of a metal compound is not particularly limited, and Si, Au, Ag, Zn, Co, Cu, Sn, Ni, Pd, Fe, Mo, Ti, Li, Nb, Mg, and Mn can be used. In particular, Si and a compound of Si are preferable. The metals, the metal compounds, the metal oxides, or the oxides of a metal compound may be used singly or in combination of two or more kinds thereof.

The carbon material as nanoparticles is not particularly limited, and for example, carbon blacks, carbon nanotubes, graphite, graphene oxides, and the like can be used.

In the present invention, when the composite material is used as a negative electrode material for a secondary battery, the nanoparticles may be particles that can absorb and release an alkali metal ion or an alkaline earth metal ion.

Examples of the alkali metal ion include a lithium ion, a sodium ion, and a potassium ion. Examples of the alkaline earth metal include a calcium ion and a magnesium ion.

The nanoparticles are preferably placed in the recesses of the carbon material. In this case, the battery characteristic of a secondary battery can be further enhanced. Furthermore, in this case, the composite material can be further suitably used as a negative electrode material such as a negative electrode active material of a secondary battery. In addition, the composite material includes the carbon material, so that the amount of another conductive auxiliary can be further reduced.

### [Method for manufacturing composite material]

In a method for manufacturing the composite material according to the present invention, first, a carbon material having a plurality of recesses and a plurality of protrusions is prepared. The carbon material having a plurality of recesses and a plurality of protrusions can be obtained by, for example, the first method or the second method shown below.

### (First method of preparing carbon material)

In the first method, first, graphite or primary exfoliated graphite and a resin are mixed to obtain a first mixture (mixing step). The mixing method is not particularly limited, and methods can be used such as mixing by an ultrasonic wave, mixing by a mixer, mixing by a stirrer, and putting graphite or primary exfoliated graphite and a resin in a sealable container and shaking the container.

In this mixing step, a solvent or the like may be further added. As the solvent, for example, water, ethanol, methanol, tetrahydrofuran (THF), and N-methyl-2-pyrrolidone (NMP) can be used. The first mixture obtained in this mixing step is preferably a mixed solution. Next, the mixed solution is dried. The drying method is not particularly limited, and methods can be used such as air drying, drying with a hot plate, vacuum drying, and freeze drying. The dried product of the mixed solution is also preferably a liquid. In the mixing step, a dispersant such as carboxymethyl cellulose (CMC) or sodium dodecyl sulfate (SDS) may be further mixed.

As the graphite, the expanded graphite is preferably used because the graphite of the expanded graphite can be further easily exfoliated in the heating step described below. Examples of the primary exfoliated graphite widely include exfoliated graphite produced through exfoliating graphite using various methods. The primary exfoliated graphite may be partially exfoliated graphite. Since the primary exfoliated graphite is produced through exfoliating graphite, the specific surface area of the primary exfoliated graphite is to be larger than that of graphite.

The resin is not particularly limited, and examples of the resin include polypropylene glycol, polyethylene glycol, polyglycidyl methacrylate, a vinyl acetate polymer (polyvinyl acetate), polyvinyl butyral, polyacrylic acid, polyesters, a styrene polymer (polystyrene), styrene butadiene rubber, polyimide resins, polytetrafluoroethylene, and fluorine-based polymers such as polyvinylidene fluoride. The resins may be used singly or in combination of two or more kinds thereof. Polyethylene glycol and aromatic polyesters are preferably used.

Next, into the dried product of the obtained first mixture, particles other than the carbon material are further added and mixed. Thus, the particles other than the carbon material are placed in the matrix of the carbon material included in the first mixture to form a second mixture. The particles other than the carbon material may be covered with the carbon material included in the second mixture to from the second mixture. The mixing method is not particularly limited, and examples of the method include mixing by an ultrasonic wave, mixing by a mixer, mixing by a stirrer, and putting the dried product of the first mixture and the particles in a sealable container and shaking the container.

The particles other than the carbon material may be an activator. The particles other than the carbon material are not particularly limited, and for example, particles of zinc hydroxide, zinc chloride, zinc sulfide, calcium hydroxide, calcium chloride, calcium sulfide, calcium carbonate, sodium hydroxide, sodium chloride, sodium sulfide, sodium carbonate, potassium hydroxide, potassium chloride, potassium sulfide, potassium carbonate, phosphoric acid, zinc phosphate, calcium phosphate, sodium phosphate, and potassium phosphate can be used. One kind of the particles may be used singly, or two or more kinds of the particles may be used in combination.

The particles other than the carbon material preferably have a particle size of 0.1 µm or more and 1,000 µm or less. By setting the particle size of the particles other than the carbon material in the above-described range, it is possible to efficiently place the nanoparticles in the recesses of the carbon material obtained using the present manufacturing method to further enhance the battery characteristic of a secondary battery. The particle size is an average particle size calculated with volume-based distribution using a dry laser diffraction method. The average particle size can be measured using, for example, MT3000II manufactured by MicrotracBEL.

Next, the second mixture is heated (heating step). The heating temperature in the heating step can be, for example, 200°C to 1,000°C. The heating may be performed in the air or in an atmosphere of an inert gas such as a nitrogen gas. It is desirable to carbonize at least a part of the resin by this heating step. The resin may be completely carbonized. In this heating step, a part of graphite of the graphite or the primary exfoliated graphite may be partially exfoliated to obtain the above-described partially exfoliated graphite. After this heating step, activation treatment may be further performed using a chemical activation method or a gas activation method.

From the heated second mixture, the particles are then removed. At this time, the portions where the particles placed in the matrix of the second mixture are removed become the plurality of recesses and the plurality of protrusions. The method of removing the particles is not particularly limited, and examples of the method include a method in which the mixture is washed with a solvent such as water and dried.

The carbon material obtained using such a manufacturing method includes the plurality of recesses and the plurality of protrusions.

In the first method, a carbon material can be obtained that is a composite of the carbon material having a graphene laminated structure, such as the original graphite, the primary exfoliated graphite, or the partially exfoliated graphite, and the resin and/or a carbide of the resin.

### (Second method of preparing carbon material)

In the second method, first, particles other than the carbon material are added and mixed into a resin to be a matrix. Thus, the particles other than the carbon material are placed in the matrix of the resin to form a mixture. The particles other than the carbon material may be covered with the resin to from the mixture. The mixing method is not particularly limited, and examples of the method include mixing by an ultrasonic wave, mixing by a mixer, mixing by a stirrer, and putting the resin and the particles in a sealable container and shaking the container.

As the resin, a liquid resin is preferably used. The resin is not particularly limited, and examples of the resin include polypropylene glycol, polyethylene glycol, polyglycidyl methacrylate, a vinyl acetate polymer (polyvinyl acetate), polyvinyl butyral, polyacrylic acid, polyesters, a styrene polymer (polystyrene), styrene butadiene rubber, polyimide resins, polytetrafluoroethylene, and fluorine-based polymers such as polyvinylidene fluoride. The resins may be used singly or in combination of two or more kinds thereof. Polyethylene glycol and aromatic polyesters are preferably used.

The particles other than the carbon material may be an activator. The particles other than the carbon material are not particularly limited, and for example, particles of zinc hydroxide, zinc chloride, zinc sulfide, calcium hydroxide, calcium chloride, calcium sulfide, calcium carbonate, sodium hydroxide, sodium chloride, sodium sulfide, sodium carbonate, potassium hydroxide, potassium chloride, potassium sulfide, potassium carbonate, phosphoric acid, zinc phosphate, calcium phosphate, sodium phosphate, and potassium phosphate can be used. One kind of the particles may be used singly, or two or more kinds of the particles may be used in combination.

The particles other than the carbon material preferably have a particle size of 0.1 µm or more and 1,000 µm or less. By setting the particle size of the particles other than the carbon material in the above-described range, it is possible to efficiently place the nanoparticles in the recesses of the carbon material obtained using the present manufacturing method to further enhance the battery characteristic of a secondary battery. The average particle size is an average particle size calculated with volume-based distribution using a dry laser diffraction method. The average particle size can be measured using, for example, MT3000II manufactured by MicrotracBEL.

Next, the mixture is heated (heating step). The heating temperature in the heating step can be, for example, 200°C to 1,000°C. The heating may be performed in the air or in an atmosphere of an inert gas such as a nitrogen gas. It is desirable to carbonize at least a part of the resin by this heating step. After this heating step, activation treatment may be further performed using a chemical activation method or a gas activation method.

From the heated mixture, the particles are then removed. At this time, the portions where the particles placed in the matrix are removed become the plurality of recesses and the plurality of protrusions. The method of removing the particles is not particularly limited, and examples of the method include a method in which the mixture is washed with a solvent such as water and dried.

The carbon material obtained using the second method also includes the plurality of recesses and the plurality of protrusions.

Therefore, as the starting material, a mixture of graphite or primary exfoliated graphite and a resin may be used as in the first method, or only a resin may be used without using graphite or primary exfoliated graphite as in the second method.

In the second method, a carbon material including only a carbide of the resin can be obtained. However, the carbon material may further include the resin that is not carbonized.

### (Method for manufacturing composite material)

Next, the carbon material having the plurality of recesses and the plurality of protrusions prepared as described above and nanoparticles are combined.

The method of combining the carbon material and the nanoparticles is not particularly limited, and can be, for example, the manufacturing method described below.

First, the nanoparticles are dispersed in a solvent, and the resulting mixture is subjected to ultrasonic treatment. Thus, a dispersion liquid of the nanoparticles is prepared. As the solvent in which the nanoparticles are dispersed, for example, protic polar solvents such as water, ethanol, and methanol, aprotic polar solvents such as tetrahydrofuran (THF) and N-methyl-2-pyrrolidone (NMP), single solvents of a non-polar solvent represented by diethyl ether, and mixed solvents thereof can be used. Next, the prepared dispersion liquid of the nanoparticles is added dropwise to the powdered carbon material prepared using the above-described method. The obtained solution containing the nanoparticles and the carbon material is subjected to ultrasonic treatment again to prepare a dispersion liquid containing the carbon material and the nanoparticles. Finally, the dispersion liquid containing the carbon material and the nanoparticles is suction-filtered, and the obtained solid can be used as the composite material according to the present invention.

In adding dropwise the prepared dispersion liquid of the nanoparticles to the carbon material, the dispersion liquid of the nanoparticles may be added dropwise to a previously produced dispersion liquid of the carbon material. The dispersion liquid of the carbon material can be obtained through, for example, dispersing the powdered carbon material in a solvent and subjecting the resulting mixture to ultrasonic treatment. Also as the solvent in which the carbon material is dispersed, for example, protic polar solvents such as water, ethanol, and methanol, aprotic polar solvents such as THF and NMP, single solvents of a non-polar solvent represented by diethyl ether, and mixed solvents thereof can be used.

In the composite material according to the present invention, the carbon material and the nanoparticles are efficiently combined to enhance the battery characteristic of a secondary battery. Therefore, the composite material according to the present invention can be suitably used as an electrode material for an electricity storage device.

### [Electrode material for electricity storage device and electricity storage device]

The electricity storage device according to the present invention is not particularly limited, and examples of the electricity storage device include nonaqueous electrolyte primary batteries, aqueous electrolyte primary batteries, nonaqueous electrolyte secondary batteries, aqueous electrolyte secondary batteries, capacitors, electric double layer capacitors, and lithium ion capacitors. The electrode material for an electricity storage device according to the present invention is an electrode material used in an electrode of such an electricity storage device as is described above. The electrode material for an electricity storage device according to the present invention includes the composite material according to the present invention.

The electricity storage device according to the present invention includes an electrode including the electrode material for an electricity storage device including the composite material according to the present invention, and therefore, the characteristic such as battery characteristic can be enhanced. In particular, the electrode material for an electricity storage device including the composite material according to the present invention can be suitably used as a negative electrode material for a secondary battery such as a lithium ion secondary battery. In this case, the battery characteristic such as the initial capacity or the cycle characteristic of the electricity storage device can be further enhanced.

The electrode material for an electricity storage device can be used as an electrode for an electricity storage device through shaping the composite material according to the present invention with, if necessary, a binder resin or a solvent.

The electrode material for an electricity storage device can be shaped through, for example, forming a sheet with a rolling roller and then drying the sheet, or may be shaped through applying a coating liquid including the composite material according to the present invention, a binder resin, and a solvent to a current collector and then drying the resulting product.

As the binder resin, for example, fluorine-based polymers such as polybutyral, polytetrafluoroethylene, styrene-butadiene rubber, polyimide resins, acrylic-based resins, and polyvinylidene fluoride, and water-soluble carboxymethyl celluloses can be used. Polytetrafluoroethylene can be preferably used. When polytetrafluoroethylene is used, the dispersibility and the heat resistance can be further enhanced.

The compounding ratio of the binder resin is preferably in the range of 0.3 parts by weight to 40 parts by weight, and more preferably in the range of 0.3 parts by weight to 15 parts by weight with respect to 100 parts by weight of the carbon material. By setting the compounding ratio of the binder resin in the above-described range, it is possible to further enhance the capacitance of an electricity storage device.

As the solvent, solvents such as ethanol, N-methylpyrrolidone (NMP), and water can be used.

When the electricity storage device is used as a capacitor, the capacitor may employ an aqueous electrolytic solution or a nonaqueous (organic) electrolytic solution.

Examples of the aqueous electrolytic solution include electrolytic solutions in which water is used as a solvent, and sulfuric acid, potassium hydroxide, or the like is used as an electrolyte.

As the nonaqueous electrolytic solution, for example, electrolytic solutions can be used in which the solvent, the electrolyte, and the ionic liquid described below are used. Specific examples of the solvent include acetonitrile, propylene carbonate (PC), ethylene carbonate (EC), dimethyl carbonate (DMC), diethyl carbonate (DEC), and acrylonitrile (AN).

Examples of the electrolyte include lithium hexafluorophosphate (LiPF₆), lithium tetrafluoroborate (LiBF₄), tetraethylammonium tetrafluoroborate (TEABF₄), and triethyl methylammonium tetrafluoroborate (TEMABF₄).

As the ionic liquid, for example, ionic liquids can be used that have the cation and the anion described below. Examples of the cation include an imidazolium ion, a pyridinium ion, a piperidium ion, a pyrrolidium ion, an ammonium ion, and a phosphonium ion. Examples of the anion include a tetrafluoroborate ion (BF₄⁻), a hexafluoroborate ion (BF₆⁻), an aluminum tetrachloride ion (AlCl₄⁻), a tantalum hexafluoride ion (TaF₆⁻), a tris(trifluoromethanesulfonyl)methane ion (C(CF₃SO₂)₃⁻), and bisfluorosulfonylimide. When the ionic liquid is used, the drive voltage can be further improved in the electricity storage device. That is, the energy density can be further enhanced.

Next, the present invention will be clarified by giving specific Examples and Comparative Examples of the present invention. Note that the present invention is not limited to Examples shown below.

### (Example 1)

Using a mixer, 1 g of expanded graphite (manufactured by TOYO TANSO CO., LTD., trade name "PF Powder 8", BET specific surface area = 22 m²/g) and 234 g of polyethylene glycol (manufactured by Sanyo Chemical Industries, Ltd., trade name "PEG600") were mixed at 7,000 rpm for 30 minutes, and then the resulting mixture was dried in a dryer at 150°C to prepare a composition in which the expanded graphite adsorbed the polyethylene glycol.

Next, to 5 g of the prepared composition, 5 g of potassium carbonate (K₂CO₃, manufactured by Wako Pure Chemical Industries, Ltd., average particle size: 600 µm) was added as an activator, and the resulting mixture was uniformly mixed using a spatula. The obtained mixture was heated in a nitrogen atmosphere from 300°C to 370°C over 3 hours to obtain a carbide. The obtained carbide was milled, and the resulting product was further subjected to activation treatment. In the activation treatment, the product was held at an activation temperature of 850°C for an activation time of 100 minutes in a nitrogen atmosphere. Finally, after the activation treatment, the obtained carbide was washed with hot water in a neutral state to obtain a carbon material.

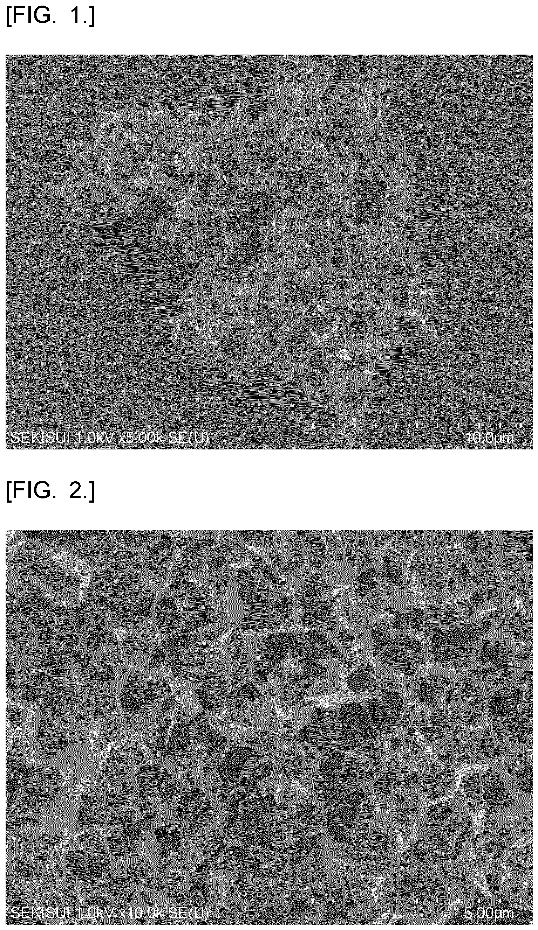

Fig. 1 is a scanning electron microscope (SEM) photograph of the carbon material obtained in Example 1 at a magnification of 5,000 times. Fig. 2 is a scanning electron microscope (SEM) photograph of the carbon material obtained in Example 1 at a magnification of 10,000 times. From Figs. 1 and 2, through observation of the scanning electron microscope (SEM) photographs of the carbon material obtained in Example 1, it was confirmed that the carbon material had a plurality of recesses and a plurality of protrusions.

Next, 20 mg of Si particles as nanoparticles (manufactured by KANTO CHEMICAL CO., INC., product number "NM-2000-HP-0050", average particle size: 100 nm) were added to 8 g of a mixed solvent of water and ethanol (mass ratio 1 : 1), and the resulting mixture was irradiated with an ultrasonic wave using an ultrasonic treatment device (manufactured by HONDA ELECTRONICS CO., LTD.) at 100 W at a transmission frequency of 28 kHz for 5 hours. Thus, a dispersion liquid of the nanoparticles was prepared. Next, 8 g of the prepared dispersion liquid of the nanoparticles was added dropwise to 80 mg of the powdered carbon material prepared using the above-described method. The obtained solution containing the nanoparticles and the carbon material was irradiated with an ultrasonic wave again using an ultrasonic treatment device (manufactured by HONDA ELECTRONICS CO., LTD.) at 100 W at a transmission frequency of 45 kHz for 1.5 hours. Thus, a dispersion liquid containing the carbon material and the nanoparticles was prepared. Finally, the obtained dispersion liquid containing the carbon material and the nanoparticles was suction-filtered, and the resulting product was washed again with 15 g of a mixed solvent of water and ethanol (mass ratio 1 : 1) to obtain a composite material. In the suction filtration, a PTFE membrane filter (3 µm, 47Φ) with a product number T300A047A manufactured by ADVANTEC Group was used as a filter paper.

### (Example 2)

A composite material was obtained in the same manner as in Example 1 except that a mixture of polyethylene glycol and terephthalic acid (manufactured by Wako Pure Chemical Industries, Ltd.) was used instead of polyethylene glycol, and that the activation time was set to 30 minutes.

### (Example 3)

A composite material was obtained in the same manner as in Example 1 except that a mixture of polyethylene glycol and terephthalic acid (manufactured by Wako Pure Chemical Industries, Ltd.) was used instead of polyethylene glycol, and that the activation temperature and the activation time were set to 800°C and 30 minutes respectively.

### (Comparative Example 1)

A composite material was obtained in the same manner as in Example 1 except that acetylene black (manufactured by Denka Company Limited, product number "Li-100") was used as it was as a carbon material instead of the carbon material having a plurality of recesses and a plurality of protrusions.

### (Comparative Example 2)

A composite material was obtained in the same manner as in Example 1 except that Ketjen black (manufactured by Lion Corporation, product number "EC300J") was used as it was as a carbon material instead of the carbon material having a plurality of recesses and a plurality of protrusions.

### (Comparative Example 3)

Using a mixer, 6 g of expanded graphite (manufactured by TOYO TANSO CO., LTD., trade name "PF Powder 8", BET specific surface area = 22 m²/g) and 120 g of polyethylene glycol (PEG, manufactured by Sanyo Chemical Industries, Ltd., trade name "PEG600", molecular weight 600) were mixed for 30 minutes.

The produced raw material composition was heat-treated at 150°C to remove the water. Then, the composition from which the water had been removed was heat-treated at a temperature of 370°C for 1 hour to produce a carbon material in which a part of the polyethylene glycol remained.

Furthermore, the produced carbon material was heat-treated at a temperature of 420°C for 0.5 hours to obtain a carbon material having a graphite structure in which graphite was partially exfoliated.

A composite material was obtained in the same manner as in Example 1 except that the carbon material obtained as described above was used instead of the carbon material having a plurality of recesses and a plurality of protrusions.

### [Evaluation]

The composite materials in Examples 1 to 3 and Comparative Examples 1 to 3 were evaluated as follows. The results are shown in Table 1 below.

### BET specific surface area;

The BET specific surface area of the carbon material before being combined with the nanoparticles was measured using a high-accuracy gas adsorption amount measuring device (manufactured by MicrotracBEL, product number "BELSORP-MAX", nitrogen gas).

### (Confirmation of presence or absence of recesses and protrusions)

The scanning electron microscope (SEM) photograph of the carbon material before being combined with the nanoparticles was observed. The carbon material having a plurality of recesses and a plurality of protrusions was designated as "○", and the carbon material not having a plurality of recesses and a plurality of protrusions was designated as "×".

### (Evaluation of rate of nanoparticles combined)

The rate of the nanoparticles combined in the composite material was measured with X-ray photoelectron spectroscopy (XPS) using an X-ray photoelectron spectrometer (manufactured by ULVAC-PHI, Inc., product number "PHI5000 Versa Probe II"). The measurement with XPS was performed in accordance with the above-described method, and the conditions were the X-ray beam diameter: 200 µm, the pass energy: 58.7 eV, elements to be measured: a carbon atom, an oxygen atom, and a silicon atom, and the number of sweeps for each element: 1 for a carbon atom, 3 for an oxygen atom, and 8 for a silicon atom. In accordance with the above-described method, elemental analysis of the nanoparticles themselves was performed in advance, and the contents of the carbon and the oxygen contained in the nanoparticles were corrected for evaluation.

The results are shown in Table 1 below.

**[Table 1]**

| | BET specific surface area (m²/g) | Recess and protrusion structure | Rate of nanoparticles combined |
|---|---|---|---|
| Ex. 1 | 997 | ○ | 12.22 % by weight |
| Ex. 2 | 1256 | ○ | 14.32 % by weight |
| Ex. 3 | 1116 | ○ | 16.37 % by weight |
| Comp. Ex. 1 | 63 | × | 9.55 % by weight |
| Comp. Ex. 2 | 800 | × | 6.75 % by weight |
| Comp. Ex. 3 | 42 | × | 9.92 % by weight |

From Table 1, it was confirmed that the carbon material and the nanoparticles were combined more efficiently to enhance the battery characteristic of a secondary battery in Examples 1 to 3 than in Comparative Examples 1 to 3.

## Claims

1. A composite material comprising:
a carbon material having a plurality of recesses and a plurality of protrusions; and
nanoparticles that are at least partially combined with the carbon material,
the composite material having a rate of the nanoparticles combined in the carbon material and the nanoparticles of 11% by weight or more.

2. The composite material according to claim 1, wherein the rate is 15% by weight or more.

3. The composite material according to claim 1 or 2, wherein the nanoparticles are placed in the plurality of recesses of the carbon material.

4. The composite material according to any one of claims 1 to 3, wherein the carbon material includes a carbon material having a graphene laminated structure.

5. The composite material according to claim 4, wherein the carbon material having a graphene laminated structure is graphite or exfoliated graphite.

6. The composite material according to claim 4 or 5, wherein the carbon material having a graphene laminated structure is partially exfoliated graphite having a graphite structure in which graphite is partially exfoliated.

7. The composite material according to any one of claims 1 to 6, wherein the nanoparticles are particles of a metal, a metal compound, a metal oxide, or an oxide of a metal compound.

8. The composite material according to claim 7, wherein the metal, the metal compound, the metal oxide, or the oxide of a metal compound includes at least one metal selected from the group consisting of Si, Au, Ag, Zn, Co, Cu, Sn, Ni, Pd, Fe, Mo, Ti, Li, Nb, Mg, and Mn.

9. An electrode material for an electricity storage device, the electrode material comprising the composite material according to any one of claims 1 to 8.

10. An electricity storage device comprising an electrode including the electrode material for an electricity storage device according to claim 9.
